Europäisches Patentamt

European Patent Office

Office européen des brevets

(19)

(11) Veröffentlichungsnummer: **0 312 742**

**A2**

(12)

# EUROPÄISCHE PATENTANMELDUNG

(21) Anmeldenummer: **88114158.4**

(22) Anmeldetag: **31.08.88**

(51) Int. Cl.⁴: **F23G 5/027**

(30) Priorität: **23.10.87 DE 3735906**

(43) Veröffentlichungstag der Anmeldung:
**26.04.89 Patentblatt 89/17**

(84) Benannte Vertragsstaaten:
**AT BE CH DE FR GB IT LI LU NL**

(71) Anmelder: **Klöckner-Humboldt-Deutz
Aktiengesellschaft
Deutz-Mülheimer-Strasse 111 Postfach 80 05
09
D-5000 Köln 80(DE)**

(72) Erfinder: **Förster, Reinhart, Dr.
Bergkreuzweg 3
D-5303 Bornheim Brenig(DE)**

(74) Vertreter: **Beisner, Klaus, Dipl.-Ing. et al
c/o KHD Humboldt Wedag AG Patente und
Lizenzen Wiersbergstrasse Postfach 91 04
57
D-5000 Köln 91(DE)**

(54) Verfahren zur thermischen Entsorgung organischer oder organisch-kontaminierter Abfallstoffe.

(57) Kontaminierte Abfallstoffe werden in der Weise entsorgt, daß sie zunächst einer Schwelung in einer indirekt beheizten Schweltrommel unterworfen werden, und daß dann die Rückstände der Schwelung mit Hilfe der Schwelgase verbrannt werden.

EP 0 312 742 A2

## Verfahren zur thermischen Entsorgung organischer oder organisch-kontaminierter Abfallstoffe

Die Erfindung betrifft ein Verfahren zur thermischen Entsorgung von organischen oder organisch-kontaminierten Abfallstoffen wie z. B. Klärschlamm, Sondermüll oder dergleichen, mit Trocknung und Verbrennung der Abfallstoffe mit geringstmöglichem Energieaufwand und umweltverträglicher Beseitigung der restlichen, unabbaufähigen Schadstoffen.

Bekannt sind Entsorgungsverfahren für solche Abfälle wie z. B. Verbrennung in üblichen Müllverbrennungsanlagen mit Rostfeuerung, oder Trocknung und Entgasen der Abfälle in Schweltrommeln mit darauffolgender Verbrennung der Schwelgasen und Deponie der festen Reststoffe, oder Verbrennung der Abfälle in Drehtrommeln usw.

Alle diese und andere herkömmliche Verfahren haben den Nachteil, daß der erforderliche Mindestheizwert eine Verbrennung ohne Zufuhr von Fremdenergie wegen der hohen Rauchgasverluste und/oder dem hohen Trocknungsaufwand in vielen Fällen ausschließt und somit unwirtschaftlich sind.

Auch die Baugrößen der Hauptaggregate sind unter Umständen bei solchen Verfahren unwirtschaftlich, da sich die thermodynamischen Bedingungen der direkten Trocknung, Schwelung und Verbrennung teilweise gegenseitig ausschließen. Außerdem entstehen bei solchen Verfahren große Menge an Rauchgas mit geringer Temperatur, bedingt durch die erforderlichen hohen Luftüberschußzahlen bei der direkten Verbrennung, was sodann zu entsprechend hohem Aufwand bei der Rauchgasreinigung führt.

Der Erfindung liegt die Aufgabe zugrunde, ein Verfahren zu schaffen, mit dem in wirtschaftlicher sowie umweltverträglicher Weise organische oder organisch-befrachtete Abfallstoffe wie z. B. Klärschlamm, Sondermüll, Chlorkohlenwasserstoffe oder dergleichen thermisch entsorgt werden können.

Diese Aufgabe wird gemäß der Erfindung mit einem Verfahren gelöst, daß mit vorteilhaften Ausgestaltungen in den Ansprüchen 1 bis 9 gekennzeichnet ist.

Beim erfindungsgemäßen Verfahren wird das nasse Aufgabegut mittels einer geeigneten Vorrichtung, beispielsweise über eine Dosierschnecke, in die Trocknungstrommel eingeführt. Dort wird mit Hilfe des aus der Schweltrommel stammenden Heißgases das enthaltene Wasser bzw. die enthaltene Feuchtigkeit ausgetrieben. Dabei bildet sich nebst den getrockneten Feststoffen eine Brüde, die, mit Hilfe eines Saugzug-Gebläses, in einem geeigneten Filter entstaubt und anschließend über den Brüdeüberhitzer zur Hochtemperatur-Nachverbrennungstrommel bzw. -Zyklonofen befördert wird. Die getrockneten Feststoffe werden, zusammen mit dem aus dem Brüdefilter abgeschiedenen Staub in eine Schweltrommel eingeleitet und dort, durch indirekte Beheizung mit Rauchgas aus der Nachverbrennung, auf eine Temperatur gebracht, die oberhalb des vorab bestimmten Vergasungstemperaturbereiches der in dem Aufgabegut enthaltenen organischen Substanzen liegt. In der Schweltrommel bilden sich Schwelgase, welche zusammen mit der überhitzten Trocknerbrüde der Hochtemperatur-Nachverbrennungsstufe zugeführt wird. In dieser Stufe, für die zweckbedingt entweder eine Trommel oder ein Zyklon verwendet wird, werden Schwelgase und Trocknerbrüde unter Verwendung der darin enthaltenen Heizwerte verbrannt. Eventuelle Heizwertdefizite bzw. Heizwertschwankungen im Schwelgas und/oder Trocknerbrüde, können zweckmäßig durch einen in der Verbrennungstrommel bzw. in dem Verbrennungszyklon installierten Stützbrenner ausgeglichen werden.

Charakteristischerweise wird die Trocknerbrüde dargestellt in die Flammenzone des Nachbrenners eingeführt, daß der thermische Abbau der organischen Stoffe bei Temperaturen unterhalb der Stickoxid-Entstehungsschwelle ermöglicht wird. Ein geregelter Teilstrom aus den der Nachverbrennungsstufe entstammenden Rauchgasen wird über einen Abhitzkessel gefahren und in einer nachgeordneten weiteren Kühlstufe zum Überhitzen der Trocknerbrüden benutzt. Das restliche Rauchgas bleibt ungekühlt und dient zur Einstellung der jeweils erforderlichen Schweltrommel-Eintrittstemperatur. Das Heißgas aus der Schweltrommel dient zur direkten Trocknung des Aufgabegutes. Aus diesem Heißgasstrom wird eine Teilmenge zwecks Entfernung restlicher Schadstoffe zu einer Gaswäsche gefördert und anschließend aus dem System entfernt.

Die Vorteile des erfindungsgemäßen Verfahrens sind im wesentlichen folgende:

Wegen der hohen Behandlungstemperaturen werden alle umweltbelastenden organischen Schadstoffe zerstört; die mineralischen Bestandteile werden als laugungsresistenter, deponierfähiger Feststoff bzw. Schlacke gewonnen; die nicht metallhaltigen Schadstoffe werden aus den Abgasen abgeschieden; da Chlorverbindungen bereits aus dem Schwelgas abgeschieden werden, wird die Rauchgaswäsche nicht, wie in herkömmlichen Entsorgungsverfahren, durch Zersetzungsprodukte der chlorhaltigen Abfallstoffe belastet; durch gezielte Ausbeutung der in dem Aufgabegut enthaltenen Heizwerte, sowie durch optimisierten Wärmeaustausch zwischen den verschiedenen Gasströmen, kann das Verfahren energieautark oder unter verhältnismäßig geringer Zufuhr von Fremdenergie verlaufen; die räumliche Trennung der Trocknungs- und Schwelstufen ermöglicht einen insgesamt geringeren apparativen Aufwand als dies bei kombinierten Trocken-/Schwelverfahren in einer einzigen Trommel oder Verbrennungskammer mit Rostfeuerung der Fall ist, wobei die Trennung dieser Stufen ebenfalls die Anwendung einer chemisch beständigen, feuerfesten Ausmauerung erübrigt und ferner Agglomerationen, sowie Verklebungen der Feststoffe im Übergangsbereich bei gesättigter Dampfatmosphäre ausschließt; vergleichsweise geringe Betriebs- und Investitionskosten; reduzierte NOx-Bildung und -Emission.

## Ansprüche

1. Verfahren zur thermischen Entsorgung von organischen oder organisch kontaminierten Abfallstoffen wie z. B. Klärschlamm, Sondermüll, kontaminierte Böden, Chlorkohlenwasserstoffe oder dergleichen, mit Trocknung und Verbrennung der Abfallstoffe, dadurch gekennzeichnet, daß die trockenen bzw. getrockneten Abfallstoffe unter energiesparenden Bedingungen in einer indirekt beheizten Schweltrommel teilweise verflüchtigt werden und die aus dieser Stufe entstandenen Rückstände anschließend in einem Hochtemperatur-Brennofen, durch direkte Verbrennung der in der vorangegangenen Schwelstufe erzeugten Schwelgase, zu einer deponierfähigen, schadstoffarmen und umweltstabilen Festmasse reduziert werden.

2. Verfahren nach Anspruch 1, dadurch gekennzeichnet, daß die Trocknung des Aufgabeguts bei einer Temperatur zwischen 250 und 500 °C vorzugsweise in einem Bereich von 350 bis 450 °C, mit Hilfe der aus der Schweltrommel stammenden Heizgase, in einer zu diesem Zwecke geeigneten, direkt beheizten Trocknungstrommel erfolgt.

3. Verfahren nach Anspruch 1, dadurch gekennzeichnet, daß die in der Trocknungsstufe entstandene Masse in einer Schweltrommel bei einer Temperatur, die oberhalb der Vergasungstemperatur der in dieser Masse enthaltenen organischen Substanzen liegt, behandelt wird.

4. Verfahren nach Anspruch 2, dadurch gekennzeichnet, daß die Schweltrommel unter Einsatz der Rauchgase aus der Hochtemperatur-Nachverbrennung indirekt beheizt wird.

5. Verfahren nach Ansprüchen 1 und 2, dadurch gekennzeichnet, daß die aus der Trocknungsphase stammenden Trocknerbrüden zusammen mit den aus der Schweltrommel stammenden Schwelgasen in einem Hochtemperatur-Brennofen im Direktverfahren verbrannt werden.

6. Verfahren nach Ansprüchen 1 bis 5, dadurch gekennzeichnet, daß die Rauchgase aus der Nachverbrennung durch Wärmeaustausch mittels der Trocknerbrüden auf die jeweils gewünschte Schweltrommel-Eintrittstemperatur gekühlt werden.

7. Verfahren nach Ansprüchen 1 bis 6, dadurch gekennzeichnet, daß zur Nachverbrennung ein Zyklonofen verwendet wird, mit dem Ergebnis, daß die Reststoffe durch Verbrennung in dem Zyklon in eine umweltstabile Schmelzschlacke überführt werden.

8. Verfahren nach Ansprüchen 1 bis 6, dadurch gekennzeichnet, daß eine Wärme-Teilmenge aus den Rauchgasen aus der Nachverbrennung, mittels eines dem Rauchgas-Trocknerbrüden-Wärmeaustauscher vorgeschalteten Abhitzekessels, zurückgewonnen wird.

9. Verfahren nach Ansprüchen 1 bis 7, dadurch gekennzeichnet, daß die in den Rauchgasen enthaltenen gasförmigen Schadstoffe durch Teilgasabzug über eine der Trocknertrommel vorgeordneten Gaswäsche entfernt werden.